(19) Europäisches Patentamt
European Patent Office
Office européen des brevets

(11) Publication number : **0 485 226 A1**

# (12) EUROPEAN PATENT APPLICATION

(21) Application number : **91310337.0**

(22) Date of filing : **08.11.91**

(51) Int. Cl.[5] : **C08J 9/16,** // (C08L25/02, 25:14)

(30) Priority : **09.11.90 US 612151**

(43) Date of publication of application : **13.05.92 Bulletin 92/20**

(84) Designated Contracting States : **AT BE CH DE DK ES FR GB GR IT LI NL SE**

(71) Applicant : **THE DOW CHEMICAL COMPANY
2030 Dow Center Abbott Road
Midland, MI 48640 (US)**

(72) Inventor : **Hitchcock, Martin K.
491 Derby Downs Road
Newark, Ohio 43055 (US)**
Inventor : **Tusim, Martin H.
1495 Londondale Parkway
Newark, Ohio 43055 (US)**

(74) Representative : **Raynor, John et al
W.H. Beck, Greener & Co 7 Stone Buildings
Lincoln's Inn
London WC2A 3SZ (GB)**

## (54) Expandable and expanded particles and a process for making the same.

(57) Expandable and expanded particles which are alkenyl aromatic-alkyl acrylate copolymers or physical blends of an alkenyl aromatic polymer, like polystyrene, and an alkenyl aromatic-alkyl acrylate copolymer, like poly(styrene-n-butyl acrylate), have decreased expansion times and lower minimum densities under the same expansion conditions when compared to expandable and expanded particles of only a alkenyl aromatic polymer.

EP 0 485 226 A1

This invention relates to expandable and expanded particles and a process for making those particles. The expandable and expanded particles are made with a specific thermoplastic resin mixture and one or more volatile physical blowing agents. This thermoplastic resin mixture is a physical mixture or blend of alkenyl aromatic polymer and an alkenyl aromatic-alkyl acrylate copolymer. It is also possible to make the expandable and expanded particles with a specific copolymer and one or more volatile physical blowing agents. This copolymer is a alkenyl aromatic-alkyl acrylate copolymer.

Expandable or expanded particles or beads are known to be highly desirable for a number of uses. One highly desirable use is protection in packaging articles for shipping. Typical materials are set forth in United States Patent Numbers. 3,066,382; 3,188,264; 3,251,728; 3,933,959; and 4,912,140. Another use for the expandable particles is as molding material.

Decreased expanded particle densities and reduced expansion times for expandable particles are desirable objectives.

The present invention provides an expandable particle comprising a thermoplastic copolymer of an alkenyl aromatic compound and an alkyl acrylate polymer, a volatile fluid blowing agent and optionally a thermoplastic alkenyl aromatic polymer. The invention also provides an expanded particle produced by expanding such an expandable particle.

In a first embodiment, the invention provides an expanded particle of a thermoplastic resin mixture of about 25 to about 95 weight percent of an alkenyl aromatic polymer and about 5 to about 75 weight percent of a alkenyl aromatic-alkyl acrylate copolymer, based on a mixture weight and a volatile fluid blowing agent. The expandable particle of this invention has a lower minimum density than an expanded particle of only the alkenyl aromatic polymer when both are expanded under the same conditions with the same amount of the same volatile fluid blowing agent.

The invention also provides an expandable particle of a thermoplastic resin mixture of about 25 to about 95 weight percent of a alkenyl aromatic acrylate polymer, and about 5 to about 75 weight percent of an alkenyl aromatic-alkyl copolymer, based on mixture weight and a volatile fluid blowing agent. The expandable particle can be expanded to a minimum density in less time than an expanded particle of only the alkenyl aromatic polymer when both are expanded under the same conditions with the same amount of the same volatile fluid blowing agent.

One may also use only an alkenyl aromatic-alkyl acrylate copolymer to make expandable and expanded particles having a lower minimum density and decreased expansion time when compared to the alkenyl aromatic expandable and expanded particles providing the alkyl acrylate in the copolymer is less than 15 weight percent based on copolymer weight.

Also part of the present invention is a process for decreasing the density and time for expansion for expandable particles. The process involves forming the expandable particles by heat plastifying a mixture of about 25 to about 95 weight percent of an alkenyl aromatic polymer and about 5 to about 75 weight percent of a an alkenyl aromatic-alkyl acrylate copolymer, based on mixture weight, then adding a volatile fluid blowing agent to the heat plastified mixture, extruding the heat plastified mixture, cooling the heat plastified mixture to prevent foaming, cutting the cooled mixture to form an expandable particle: and expanding the expandable particle to form an expanded particle.

Surprisingly, thermoplastic resin blends of an alkenyl aromatic polymers and an alkenyl aromatic-alkyl acrylate copolymer when used to prepare an expandable particle have substantially faster expansion times upon expansion and the expanded alkenyl aromatic-alkyl acrylate copolymer particle has a lower density when compared to an alkenyl aromatic expanded particle where both have been expanded under the same conditions. Alkenyl aromatic-alkyl acrylate copolymers having less than 15 weight percent alkyl acrylate based on copolymer weight have also been found to be useful used alone.

Also, it is also possible to decrease the amount of blowing agent used to prepare the expandable and expanded particles of the present invention as compared to the alkenyl aromatic expandable particles, while still being able to maintain the same or equivalent density of alkenyl aromatic expanded particles.

In a first embodiment, the expandable and expanded particles of the present invention are alkenyl aromatic polymer/(alkenyl aromatic-alkyl acrylate) copolymer blends or mixtures containing a volatile blowing agent mixture. In a second embodiment, alkenyl aromatic-alkyl acrylate copolymers having less than 15 weight percent alkyl acrylate based on copolymer weight containing a volatile blowing agent mixture are employed.

In the present invention of expandable and expanded particles, the term alkenyl aromatic polymer includes polymers or copolymers having in chemically combined form at least 50 percent by weight of at least one alkenyl aromatic compound having the general formula

$$
\begin{array}{c} R \\ | \\ Ar-C=CH_2 \end{array}
$$

wherein the Ar represents an aromatic hydrocarbon radical or an aromatic halohydrocarbon radical of the benzene series and R is hydrogen or the methyl radical. Examples of such alkenyl aromatic resins are the solid homopolymers of styrene, alpha-methylstryrene, o-methylstyrene, m-methylstyrene, p-methylstyrene, ar-ethylstyrene, ar-vinylxylene, ar-chlorostyrene, or ar-bromostyrene; the solid copolymers of two or more of such alkenyl aromatic compounds with minor amounts of other readily polymerizable olefinic compounds such as divinylbenzene, methylmethacrylate or acrylonitrile, etc.

Preferably, the alkenyl aromatic polymer is polystyrene having a weight-average molecular weight (Mw) of 100,000 to 300,000.

The term alkenyl aromatic-alkyl acrylate copolymer means those copolymers having from 0.1 to 30 weight percent, by copolymer weight, of an alkyl acrylate in the copolymer. The alkenyl aromatic portion has been previously described and the alkyl acrylate portion is derived from esters of acrylic acid with an alcohol having from 1 to 12, preferably from 2 to 8 carbon atoms. Representative of such esters are ethyl acrylate, iso-propylacrylate, n-propylacrylate, n-butylacrylate, secondary-butylacrylate, tertiary-butyl acrylate octylacrylate and 2-ethylhexyl-acrylate. Of these esters, those having from 3 to 6, more preferably 4, carbon atoms are preferred. N-Butyl acrylate is the most preferred acrylic acid ester radical in the copolymer. The preparation and properties of these copolymers are detailed in United States Patent Number 4,782,127, which is hereby incorporated by reference. Preferably the alkenyl aromatic-alkyl acrylate copolymer is poly(styrene-n-butyl acrylate) has 3 to 25 weight percent, by copolymer weight, of n-butyl acrylate and a weight-average molecular weight (Mw) of 150,000 to 350,000. More preferably the alkenyl aromatic-alkyl acrylate copolymer is poly(styrene-n-butyl acrylate) has 3.5 to 12 weight percent, by copolymer weight, of n-butyl acrylate and a weight-average molecular weight (Mw) of 160,000 to 230,000.

If the alkenyl aromatic-alkyl acrylate copolymer is not part of a blend the aromatic-alkyl acrylate copolymer must have less than 15 weight percent alkyl acrylate based on copolymer weight.

While it is possible to use only the alkenyl aromatic-alkyl acrylate copolymer to make the expandable and expanded particles, larger cell sizes are usually obtained and depending on specific expansion conditions, including temperature and expansion time, foam collapse can be a problem. The blend or mixture of the alkenyl aromatic polymer and the alkenyl aromatic-alkyl acrylate copolymer is preferred and avoids these problems. This mixture requires about 25 to about 95 weight percent of the alkenyl aromatic polymer and about 5 to about 75 weight percent of an alkenyl aromatic-alkyl acrylate copolymer with the weight based on mixture weight. Preferably the mixture has 50 to about 95 weight percent of the alkenyl aromatic polymer and about 5 to about 50 weight percent of an alkenyl aromatic-alkyl acrylate copolymer.

The volatile fluid foaming agent mixture usually is employed in amounts corresponding to from about 1 to about 15 percent of the weight of the total formulation. After expansion part or all of the volatile fluid blowing agent mixture may or may not be retained in the expanded alkenyl aromatic polymer particle. Some examples of blowing agents include mixtures of a first blowing agent of 1,1-difluoro-1-chloroethane and a second blowing agent of normal pentane (n-pentane), isopentane, neopentane or mixtures of two or more of those pentanes, as detailed in United States Patent Number 4,912,140. Other volatile fluid foaming agents can be gases such as carbon dioxide, a saturated aliphatic hydrocarbon such as butane, isobutane, pentane, isopentane, cyclopentane, neopentane, hexane, heptane or mixtures of one or more aliphatic hydrocarbons having a molecular weight of at least 65 and a boiling point not higher than 95 degrees centigrade (C.) at 760 millimeters absolute pressure. Still other suitable fluid foaming agents are those halogenated hydrocarbons generally known in the art.

Another class of foaming agents generally used are those chemical blowing agents which decompose under specific conditions, usually heat, to produce a gas, usually nitrogen or carbon dioxide, which causes foaming.

It is well known in the art to extrude foamable alkenyl aromatic polymer particles by cooling the viscous melt of the thermoplastic resin or resin mixture and the blowing agent below the blowing temperature under pressure and to subsequently pass a strand into atmospheric pressure and while rapidly cooling thestrand into a solid or non-heat plastified state. It is also possible to extrude and expand these thermoplastic particles directly upon exiting a die.

It is also possible to include in the thermoplastic resin/blowing agent mixture other additives which are known in the art such as fire retardants, stabilizers, fillers, anti-static agents, density modifiers and colorants.

Also those materials known as "cell-size control additives" may be incorporated into the thermoplastic resin/blowing agent mixture for use in the production of uniform extruded foam prior to extrusion from a die.

A typical expansion scheme will use steam or hot air and will consist of a 3 minute exposure followed by a 24 hour aging time at room conditions, then a second 3 minute exposure followed by a second 24 hour aging time, and then a third 1 1/2 minute exposure and a third 24 hour aging time. Many other expansion schemes are also possible and the present invention is not limited to any particular expansion scheme.

The atmospheric steam chamber used for expansion has a temperature generally ranging from about 85 degrees C.(centigrade) to about 105 degrees C. The expanded particles preferably should have a foam density of less than about 12.8 kilograms per cubic meter (0.8 pounds per cubic foot) and most preferably should have a foam density of less than about 9.6 kilograms per cubic meter (0.6 pounds per cubic foot). Also preferably cell sizes within the expanded particles should be 0.8 millimeters or less.

While the expandable particles produced may be in any form, particularly preferred are those forms suitable for packaging or dunnage purposes and those forms which after expansion are suitable for molding purposes.

The following examples and comparative examples illustrate the present invention. The weight percent blowing agent numbers are weight percent based on total mixture weight (polymer/blowing agent mixture). The polystyrene has a Mw of about 175,000 and a density of 1.05 grams/cubic centimeter.

EXAMPLE and COMPARATIVE EXAMPLE 1

A blend of poly(styrene-n-butyl acrylate) (SBA) (with 11.8 weight n-butyl acrylate in the copolymer and a Mw of 203,000) and polystyrene (PS) with the blend having 25 weight percent SBA by total blend weight was heat plastified. A blowing agent of n-pentane at a 6.5 percent level was added. The heat plastified resin/blowing agent mixture was then extruded as an "S"-shaped strand and immediately cooled in cold water to prevent foaming to form expandable particles. The strand was then chopped into pieces about 5.1 mm (millimeters) (0.2 inches) in length and 6.4 mm (0.25 inches) in width.

Expandable polystyrene particles were also produced with the same kind and amount of blowing agent for comparative purposes.

Samples of these expandable particles were then expanded under the following conditions for various lengths of time. First the expandable particles were soaked in water at 62 degree centigrade for 45 minutes, then immediately transferred to 20 degree centigrade water for a minimum of five minutes. Samples were then expanded with atmospheric steam for differing time lengths. After each expansion the expanded particles were aged for 24 hours. In some instances, where indicated, second and third expansion and aging steps were performed.

Foam particle densities and the times necessary to reach those densities were noted.

TABLE 1

ONE EXPANSION PASS

| TIME seconds | PS/SBA DENSITY $kg/m^3$ | PS DENSITY $kg/m^3$ |
|---|---|---|
| 45 | 12.7 | no expansion |
| 60 | 10.4 | no expansion |
| 90 | 10.1 | 14.3 |
| 120 | 9.1 | 13.1 |
| 180 | 9.5 | 12.0 |
| 240 | 12.7 | 11.4 |
| 300 | 13.5 | 10.6 |

As can be seen by looking at Table 1 the PS/SBA thermoplastic resin blend expands to a lower density more quickly than the PS expandable particle. At the 120 second mark the PS/SBA blend particle has attained its minimum density, which is 30 percent less than the density of the PS particle at the same time mark and even at the 300 second mark for expansion the density of the PS particle is still 15 percent greater than the lowest PS/SBA density. Under the same expansion conditions at 120 seconds the PS particle has not reached

a minimum density, rather it continues to decrease in density through the 300 second time mark. It can also be seen by looking at Table 1 that heating for a period of time greater than 180 seconds causes an increase in density due to foam collapse which is detrimental to PS/SBA particles.

This table shows that under the same expansion conditions, the PS/SBA blend yields a lower density in a decreased amount of expansion time. This product provides a greater volume per given weight of product and will decrease the amount of steam necessary for expansion because the PS/SBA particle expansion time is significantly reduced.

EXAMPLE and COMPARATIVE EXAMPLE 2

A blend of poly(styrene-n-butyl acrylate) (SBA) (with 11.8 weight n-butyl acrylate in the copolymer and a Mw of 203,000) and polystyrene (PS) with the blend having 50 weight percent SBA by total blend weight was heat plastified. A blowing agent of n-pentane at a 6.5 percent level was added. The heat plastified resin/blowing agent mixture was then extruded as an "S"-shaped strand and immediately cooled in cold water to prevent foaming to form expandable particles. The strand was then chopped into pieces about 5.1 mm (millimeters) (0.2 inches) in length and 6.4 mm (0.25 inches) in width.

Expandable polystyrene particles were also produced with the same kind and amount of blowing agent for comparative purposes.

Samples of these expandable particles were then expanded under the following conditions for various lengths of time. First the expandable particles were soaked in water at 60 degree centigrade for 45 minutes, then immediately transferred to room temperature water (approximately 20-25 degrees centigrade) for a minimum of five minutes. Part of the sample was then immediately expanded with atmospheric steam for differing time lengths. Another part of the sample was placed in a freezer at -10 degrees centigrade for a period of 16 hours. After each expansion the expanded particles were aged for 24 hours. In some instances, where indicated second and third expansion and aging steps were performed.

The PS/SBA particles which were immediately expanded while still wet had cell sizes of greater than 1.5 millimeters. Cell sizes this large cause the foam to be unacceptable for packaging purposes.

The expandable particles which had been placed in the freezer were then expanded. Table 2 contains the foam particle densities and the times necessary to reach those densities.

TABLE 2

THREE EXPANSION PASSES

| TIME Seconds | FIRST PASS DENSITY KG/M3 | TIME Seconds | SECOND PASS DENSITY KG/M3 | TIME Seconds | THIRD PASS DENSITY KG/M3 |
|---|---|---|---|---|---|
| 20 | 109.8 | 30 | 31.2 | 30 | 16.2 |
| | | | | 60 | 16.7 |
| | | 60 | 30.0 | 30 | 14.9 |
| | | | | 60 | 13.9 |
| 40 | 46.5 | 30 | 20.0 | 30 | 11.4 |
| | | | | 60 | 10.7 |
| | | 60 | 20.2 | 30 | 11.9 |
| | | | | 60 | 10.7 |
| 60 | 32.7 | 30 | 16.3 | 30 | 10.4 |
| | | | | 60 | 10.9 |
| | | 60 | 16.8 | 30 | 9.3 |
| | | | | 60 | 9.1 |

Table 2 shows that material was expanded at different times during a first pass. That first pass expanded material was then divided and expanded for different times during a second pass. Second pass expanded material was then divided and expanded for different times during a third pass.

As can be seen by looking at Table 2 the lowest density was achieved in a 60-60-60 expansion. However, the 60-60-30 expansion produced almost equivalent results. This then indicates that PS/SBA expandable particles can be expanded to an acceptable density in less than three minutes and perhaps as little as 2 1/2 minutes.

The best obtainable density for the PS expandable particle in a 60-60-60 (seconds for each of three passes) expansion was 29.6 kg/m 3 (kilograms per cubic meter) (1.85 1b/ft3 (pounds per cubic foot)). While it was also possible to achieve a 0.6 1b/ft3 for the expanded PS particle, it required three passes with the first at 120 seconds, the second pass at 180 seconds and the third pass at 90 seconds. This is a total time of 390 seconds compared to the 180 seconds total for the PS/SBA expandable particle. This is a reduction of 210 seconds in the expansion time to achieve the same density.

EXAMPLE 3

Further testing was performed using a variety of poly(styrene-n-butyl acrylate) having 3.45, 5.77, 5.99, 11.80, 11.90 and 12.00 weight percents of n-butyl acrylate in the copolymer,based on copolymer weight and Mw's of 193,000, 221,000, 202,000, 203,000, 320,000 and 242,000 respectively with a blowing agent of n-pentane and blowing agent levels of either 5.5 or 6.5 weight percent. The testing showed that by soaking the SBA expandable particles in water at 60 degree centigrade for 45 minutes, and then immediately placing the soaked expandable particles in a freezer for an extended drying time produced SBA expanded particles which had cell sizes less than 0.8 millimeters, although when using atmospheric steam for expansion foam collapse was still a problem.

EXAMPLE 4

Poly(styrene-n-butyl acrylate) (SBA) (with 10.0 weight percent n-butyl acrylate in the copolymer,based on copolymer weight) was heat plastified. A blowing agent of n-pentane at a 5.8 percent level was added. The heat plastified resin/blowing :gent mixture was then extruded as an "S"-shaped strand and immediately cooled in cold water to prevent foaming and chopped to form expandable particles.

Expandable polystyrene particles were also produced with a 6.5 percent level of n-pentane for comparative purposes.

Upon expansion of equal amounts of both PS and SBA expandable particles, the SBA particles required less time to expand at lower temperatures and yielded a density equivalent to the expanded PS particles.

The steam temperature for the expansion of the expandable PS particles was 96.1 degrees centigrade (205 degrees Fahrenheit) and the steam temperature for the expansion of the expandable SBA particles was 87.8 degrees centigrade (190 degrees Fahrenheit).

The cell sizes of the SBA expanded particles were less than 0.8 millimeters and the foam did not collapsed upon removal from the steam. A significant savings will result from this decreased expansion temperature requirement and increased expansion throughput of the expandable SBA particles.

As is apparent from the foregoing in this specification the present invention is susceptible of being embodied with various alterations and modifications which may differ particularly from those which have been described in the specification. For this reason it is to be fully understood that the examples are to be merely illustrative and should not be construed or interpreted as being restrictive or otherwise limiting of the present invention.

## Claims

1. An expandable particle comprising a thermoplastic copolymer of an alkenyl aromatic compound and an alkyl acrylate polymer, a volatile fluid blowing agent and optionally a thermoplastic alkenyl aromatic polymer.

2. A particle as claimed in claim 1, wherein the alkyl acrylate is n-butyl acrylate.

3. A particle as claimed in claim 1 or claim 2, wherein the alkenyl aromatic compound is styrene.

4. An expandable particle as claimed in any one of the preceding Claims, which also comprises the thermoplastic alkenyl aromatic polymer.

5. An expandable particle as claimed in Claim 4, consisting essentially of a copolymer as defined in any on of claims 1 to 4, the thermoplastic alkenyl aromatic polymer, and a volatile fluid blowing agent.

6. A particle as claimed in claim 4 or claim 5, wherein the alkenyl aromatic polymer is polystyrene and the copolymer is a copolymer of styrene and n-butyl acrylate.

7. A particle as claimed in any one of the preceding Claims, comprising from 25 to 95 weight percent of the thermoplastic alkenyl aromatic polymer, and from 5 to 75 weight percent of the said copolymer, the said weight percentages being based on the total amount of the alkenyl aromatic polymer and the said copolymer.

8. A particle as claimed in claim 7, wherein the copolymer is a copolymer of styrene and from 0.1 to 30 weight percent based on the copolymer, of n-butyl acrylate.

9. An expandable particle as claimed in any one of claims 1 to 3, consisting essentially of alkenyl aromatic-alkyl acrylate copolymer, and wherein the amount of the alkyl acrylate in the said copolymer is less than 15 weight percent, based on the weight of the copolymer.

10. A particle as claimed in any one of the preceding claims, which has an expansion time to a density of what the minimum density would have been of a similar particle comprising only the alkenyl aromatic polymer, which expansion time is at least 30 percent less than the expansion time of such a particle comprising only the said alkenyl aromatic polymer to its minimum density.

11. An expanded particle produced by expanding an expandable particle as claimed in any one of the preceding claims.

12. A process for producing expandable particles comprising the steps of:
    (1) heat plastifying a thermoplastic resin;
    (2) adding a volatile fluid blowing agent to the heat plastified mixture;
    (3) extruding the heat plastified mixture;
    (4) cooling the heat plastified mixture to prevent foaming;
    (5) cutting the cooled mixture to form expandable particles; characterised in that the,thermoplastic resin comprises a thermoplastic copolymer of an alkenyl aromatic compound and an alkyl acrylate, and optionally an alkenyl aromatic polymer.

13. A process as claimed in Claim 12 or Claim 13, wherein the expansion is performed with steam or with hot air.

European Patent Office

# EUROPEAN SEARCH REPORT

Application Number

EP 91 31 0337

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CHEMICAL ABSTRACTS, vol. 77, no. 18, 30th October 1972, page 38, abstract no. 115400n, Columbus, Ohio, US; & JP-A-71 42 236 (KANEGAFUCHI CHEMICAL INDUSTRY CO., LTD) 14-12-1971<br>* Abstract * | 1-3,9, 10,11, 13 | C 08 J 9/16 //<br>(C 08 L 25/02<br>C 08 L 25:14 ) |
| X | FR-A-2 289 553 (SEKISUI KASEIHIN KOGYO K.K.)<br>* Page 5, lines 20-24; example 3; claims 1,3 * | 1-3,9, 11,13 | |
| X | FR-A-1 600 621 (UGINE KUHLMANN)<br>* Abstract point 1; page 4, lines 12-22; page 5, lines 19-22 * | 1-8,11, 13 | |
| A | US-A-4 839 396 (M.H. TUSIM)<br>* Whole document * | 1,12 | |

TECHNICAL FIELDS SEARCHED (Int. Cl.5)

C 08 J

The present search report has been drawn up for all claims

| Place of search | Date of completion of the search | Examiner |
|---|---|---|
| THE HAGUE | 21-02-1992 | NIAOUNAKIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)